# EUROPÄISCHE PATENTSCHRIFT

(11) **EP 2 352 784 B1**
(45) Veröffentlichungstag und Bekanntmachung des Hinweises auf die Patenterteilung: **28.08.2013**
(21) Anmeldenummer: 09756718.4
(22) Anmeldetag: 17.11.2009
(51) Int. Cl.: C08J 5/10, C08K 5/098, F16L 55/162, B29C 47/00, C08G 69/04, C08L 77/00

(54) **VERFAHREN ZUR HERSTELLUNG EINER FORMMASSE ODER EINES FORMTEILS MIT ERHÖHTER SCHMELZESTEIFIGKEIT**
METHOD FOR PRODUCING A MOLDING COMPOUND OR A MOLDED PART HAVING INCREASED MELT STIFFNESS
PROCÉDÉ DE FABRICATION D'UNE MATIÈRE À MOULER OU D'UNE PIÈCE MOULÉE PRÉSENTANT UNE RIGIDITÉ À L'ÉTAT FONDU ACCRUE

(30) Priorität: 01.12.2008 DE 102008044225
(43) Veröffentlichungstag der Anmeldung: 10.08.2011
(73) Patentinhaber: Evonik Degussa GmbH, 45128 Essen (DE)
(72) Erfinder: DOWE, Andreas, 46325 Borken (DE); BEUTH, Reinhard, 45772 Marl (DE); BAUMANN, Franz-Erich, 48249 Dülmen (DE)
(86) Internationale Anmeldenummer: PCT/EP2009/065289
(87) Internationale Veröffentlichungsnummer: WO 2010/063568

(56) Entgegenhaltungen:
- EP-A1- 1 690 889
- EP-A1- 1 690 890
- EP-A1- 1 741 540
- EP-A2- 1 512 710
- DE-A1-102006 038 108
- DE-A1-102008 001 678
- US-B1- 7 005 481

## Beschreibung

Die Erfindung betrifft ein Verfahren zur Herstellung einer Formmasse aus Polyamid und Polyetheramid mit erhöhter Schmelzesteifigkeit sowie ein Verfahren zur Herstellung entsprechender Formteile.

Aus der WO 00/66650 ist ein Verfahren zur Aufkondensierung von Polyamiden bekannt, bei dem als das Molekulargewicht erhöhende Additiv eine Verbindung mit mindestens zwei Carbonateinheiten verwendet wird. Das Additiv reagiert mit Aminoendgruppen des Polyamids unter Kettenverknüpfung. Dabei ermöglicht die Eindosierung des Additivs in Form eines Masterbatches eine genauere Dosierung des Additivs. Entsprechende Verfahren sind aus der EP 1 512 710 A2, der EP 1 690 889 A1 und der EP 1 690 890 A1 bekannt. Es wurde gefunden, dass durch die Verwendung eines Masterbatches eine verbesserte Extrudatqualität erzielt wird. Gemäß diesem Stand der Technik umfasst das Masterbatch als Matrixmaterial bevorzugt das Polyamid, das auch aufkondensiert werden soll, oder ein damit verträgliches Polyamid. Hierbei sind als Material für das Masterbatch diejenigen Polyamide bevorzugt, deren Endgruppen überwiegend als Carbonsäuregruppen vorliegen. Beispielsweise liegen gemäß EP 1 690 889 A1 mindestens 80 %, mindestens 90 % oder mindestens 95 % der Endgruppen als Säuregruppen vor. Dies ist auch plausibel, da ein größerer Anteil an Aminoendgruppen im Polyamid dazu führen würde, dass diese bereits bei der Herstellung des Masterbatches mit dem Additiv reagieren und einen unerwünschten Molekulargewichtsaufbau ergeben, was das Einmischen des Masterbatches erheblich erschweren würde. Weil darüber hinaus ein Teil des Additivs abreagiert wäre, würde eine genaue Dosierung des Additivs in der Gesamtformulierung erschwert werden.

Weitere entsprechende Verfahren sind in der DE 10 2006 038 108 A1, der EP 1 741 540 A1 und der DE 10 2008 001 678 A1 offenbart. In der DE 10 2006 038 108 A1 wird beschrieben, dass nach dem obengenannten Verfahren ein Rohr oder Schlauch hergestellt werden kann, welche als Inliner für eine Rohrleitung verwendet werden. Die DE 10 2008 001 678 A1 offenbart einen entsprechend hergestellten Inliner, bei dem vor dem Einbringen in eine Rohrleitung der Querschnitt durch das Einwirken einer äußeren Kraft verringert wird. Gemäß der EP 1 741 540 A1 wird nach dem gleichen Verfahren ein Mehrschichtrohr extrudiert, bei dem eine Schicht aus einer Polyamidformmasse mit hoher Schmelzesteifigkeit und eine andere Schicht aus einer Formmasse auf Basis eines hochschmelzenden Polymers besteht.

Die Verfahren gemäß EP 1 690 889 A1 und EP 1 690 890 A1 haben sich insbesondere bei der Herstellung oder Beschichtung von Großrohren bewährt. Bei derartigen Rohren, die z. B. als Inliner, konstruktive Schicht oder Beschichtung von Transport-, Ver- oder Entsorgungsleitungen eingesetzt werden, beispielsweise für den Transport von Femwärme, Frischwasser, Abwasser, Gas, Ölen wie z. B. Rohöl, Kraftstoffen, Petrochemikalien, Lösungsmittel, Solen oder Laugen, liegt jedoch ein erheblicher Nachteil darin begründet, dass die über das Masterbatch eingeschleppten Carboxylendgruppen die Hydrolysestabilität des Polyamids verringern.

Daher stellte sich die Aufgabe, ein Verfahren bereitzustellen, das die Herstellung von hydrolysestabileren Formmassen und Formteilen mit erhöhter Schmelzesteifigkeit und mit minimiertem Gehalt an Carboxylendgruppen gestattet.

Diese Aufgabe wurde gelöst durch ein Verfahren zur Herstellung einer Formmasse oder eines Formteils unter Aufkondensieren einer Polyamidformmasse mit 0,005 bis 10 Gew.-%, bezogen auf das Polyamid, einer Verbindung mit mindestens zwei Estereinheiten der Kohlensäure, insbesondere mit Phenolen oder Alkoholen, das folgende Schritte enthält:
a) Eine Polyamidformmasse auf Basis eines Polyamids und gegebenenfalls eines Polyetheramids wird bereitgestellt, wobei die Endgruppen des Polyamids zu mindestens 50 %, bevorzugt zu mindestens 60 %, besonders bevorzugt zu mindestens 70 %, insbesondere bevorzugt zu mindestens 80 % und ganz besonders bevorzugt zu mindestens 90 % als Aminoendgruppen vorliegen, der Anteil an Polyamid 10 bis 99 Gew.-Teile, bevorzugt 20 bis 95 Gew.-Teile, besonders bevorzugt 30 bis 90 Gew.-Teile und insbesondere bevorzugt 40 bis 85 Gew.-Teile und der Anteil an Polyetheramid 0 bis 90 Gew.-Teile, bevorzugt 0 bis 80 Gew.-Teile, besonders bevorzugt 0 bis 70 Gew.-Teile und insbesondere bevorzugt 0,1 bis 60 Gcw. Teile beträgt,
b) eine Mischung der Polyamidformmasse und eines Masterbatches, das die Verbindung mit mindestens zwei Carbonateinheiten sowie ein Polyetheramid enthält, wird hergestellt, wobei der Anteil an Polyetheramid im Masterbatch 1 bis 90 Gew.-Teile, bevorzugt 5 bis 80 Gew.-Teile, besonders bevorzugt 10 bis 70 Gew.-Teile und insbesondere bevorzugt 15 bis 60 Gew.-Teile beträgt,
   wobei die Summe der Gew.-Teile des Polyamids von a), des Polyetheramids von a) und des Polyetheramids von b) 100 beträgt und die Endgruppen des Polyetheramids zu mindestens 50 %, bevorzugt zu mindestens 60 %, besonders bevorzugt zu mindestens 70 %, insbesondere bevorzugt zu mindestens 80 % und ganz besonders bevorzugt zu mindestens 90 % als Aminoendgruppen vorliegen,
c) die Mischung wird gegebenenfalls gelagert und/oder transportiert,
d) die Mischung wird unter Scherung in der Schmelze gemischt und
e) die Schmelzemischung wird ausgetragen und verfestigt.

Die resultierende Formmasse bzw. das resultierende Formteil enthalten somit 10 bis 99 Gew.-Teile Polyamid und 1 bis 90 Gew.-Teile Polyetheramid, vorzugsweise 20 bis 95 Gew.-Teile Polyamid und 5 bis 80 Gew.-Teile Polyetheramid, besonders bevorzugt 30 bis 90 Gew.-Teile Polyamid und 10 bis 70 Gew.-Teile Polyetheramid und insbesondere bevorzugt 40 bis 85 Gew.-Teile Polyamid und 15 bis 60 Gew.-Teile Polyetheramid. Die Summe der Gewichtsteile von Polyamid und Polyetheramid beträgt hierbei 100. Bei mehrkomponentigen Formteilen gilt diese Zusammensetzung für die Komponente, z. B. Schicht, aus der erfindungsgemäß hergestellten Polyamid/Polyetheramid-Formmasse; andere vorhandene Komponenten, z. B. Schichten, können aus anderen Materialien bestehen.

Ein im Sinne der Erfindung geeignetes Polyamid ist auf Basis von Lactamen, Aminocarbonsäuren, Diaminen bzw. Dicarbonsäuren aufgebaut. Es kann darüber hinaus verzweigend wirkende Bausteine enthalten, die beispielsweise von Tricarbonsäuren, Triaminen oder Polyethylenimin abgeleitet sind. Geeignete Typen sind, jeweils als Homopolymer oder als Copolymer, beispielsweise PA6, PA46, PA66, PA610, PA66/6, PA6/6T, PA66/6T sowie insbesondere PA610, PA612, PA810, PA108, PA812, PA128, PA814, PA148, PA1010, PA1012, PA1212, PA613, PA614, PA1014, PA8, PA9, PA10, PA11 oder PA12.

Die Polyamidformmasse aus Schritt a) kann neben dem Polyamid als weiteren Bestandteil auch ein Polyetheramid auf der Basis von Lactamen, Aminocarbonsäuren, Diaminen, Dicarbonsäuren und Polyetherdiaminen enthalten, das vorzugsweise mit dem Polyetheramid des Masterbatches identisch ist. Hinsichtlich der Endgruppen unterliegt es den gleichen Einschränkungen wie das Polyetheramid des Masterbatches.

Bevorzugt haben die Ausgangspolyamide Molekulargewichte Mₙ von größer als 5000, insbesondere von größer als 8000. Hierbei werden Polyamide eingesetzt, deren Endgruppen zumindest teilweise als Aminogruppen vorliegen. Beispielsweise liegen mindestens 50 %, mindestens 60 %, mindestens 70 %, mindestens 80 % oder mindestens 90 % der Endgruppen als Aminoendgruppen vor. Die Herstellung von Polyamiden mit höherem Aminoendgruppengehalt unter Verwendung von Diaminen oder Polyaminen als Regler ist Stand der Technik. Im vorliegenden Fall wird bei der Herstellung des Polyamids bevorzugt ein aliphatisches, cycloaliphatisches oder araliphatisches Diamin mit 4 bis 44 C-Atomen als Regler eingesetzt. Geeignete Diamine sind beispielsweise Hexamethylendiamin, Decamethylendiamin, 2.2.4- bzw. 2.4.4-Trimethylhexamethylendiamin, Dodecamethylendiamin, 1.4-Diaminocyclohexan, 1.4-oder 1.3-Dimethylaminocyclohexan, 4.4'-Diaminodicyclohexylmethan, 4.4'-Diamino-3.3'-dimethyldicyclohexylmethan, 4.4'-Diaminodicyclohexylpropan, Isophorondiamin, Metaxylylendiamin oder Paraxylylendiamin.

In einer weiteren bevorzugten Ausführungsform wird bei der Herstellung des Polyamids ein Polyamin als Regler und gleichzeitig Verzweiger eingesetzt. Beispiele hierfür sind Diethylentriamin, 1.5-Diamino-3-(β-aminoethyl)pentan, Tris(2-aminoethyl)antin, N,N-Bis(2-aminoethyl)-N',N'bis[2-[bis(2-aminoethyl)amino]-ethyl]-1,2-ethandiamin, Dendrimere sowie Polyethylenimine, insbesondere verzweigte Polyethylenimine, die durch Polymerisation von Aziridinen erhältlich sind (Houben-Weyl, Methoden der Organischen Chemie, Band E20, Seiten 1482 - 1487, Georg Thieme Verlag Stuttgart, 1987) und die in der Regel folgende Aminogruppenverteilung besitzen:
25 bis 46 % primäre Aminogruppen,
30 bis 45 % sekundäre Aminogruppen und
16 bis 40 % tertiäre Aminogruppen.

Die Polyamidformmasse kann in einer möglichen Ausführungsform nur aus Polyamid bestehen. Sie kann jedoch auch die üblichen Zuschlagstoffe enthalten, die bei der Herstellung von Polyamidformmassen Verwendung finden. Illustrative Beispiele hierfür sind Färbemittel, Additive, die eine Laserbeschriftbarkeit ermöglichen, Flammverzögerer und -schutzmittel, Stabilisatoren, Füllstoffe, Gleitfähigkeitsverbesserer, Formentrennmittel, Schlagzähmodifikatoren, Weichmacher, Kristallisationsbeschleuniger, Antistatika, Schmiermittel, Verarbeitungshilfsmittel sowie weitere Polymere, die mit Polyamiden üblicherweise compoundiert werden. Um Carboxylgruppen abzufangen, die beim Alterungsprozess entstehen können, kann die Polyamidformmasse auch ein Bis- oder Oligooxazolin und/oder ein Bis-, Oligo- oder Polycarbodiimid enthalten.

Beispiele dieser Zuschlagstoffe sind wie folgt:
Färbemittel: Titandioxid, Bleiweiß, Zinkweiß, Liptone, Antimonweiß, Ruß, Eisenoxidschwarz, Manganschwarz, Kobaltschwarz, Antimonschwarz, Bleichromat, Mennige, Zinkgelb, Zinkgrün, Cadmiumrot, Kobaltblau, Berliner Blau, Ultramarin, Manganviolett, Cadmiumgelb, Schweinfurter Grün, Molybdänorange und -rot, Chromorange und -rot, Eisenoxidrot, Chromoxidgrün, Strontiumgelb, Molybdänblau, Kreide, Ocker, Umbra, Grünerde, Terra di Siena gebrannt, Graphit oder lösliche organische Farbstoffe.

Flammverzögerer und Flammschutzmittel: Antimontrioxid, Hexabromcyclododecan, Tetrachlor- oder Tetrabrombisphenol und halogenierte Phosphate, Borate, Chlorparaffine sowie roter Phosphor, ferner Stannate, Melamincyanurat und dessen Kondensationsprodukte wie Melam, Melem, Melon, Melaminverbindungen wie Melaminpyro- und -polyphosphat, Ammoniumpolyphosphat, Aluminiumhydroxid, Calciumhydroxid sowie phosphororganische Verbindungen, die keine Halogene enthalten wie beispielsweise Resorcinoldiphenylphosphat oder Phosphonsäureester.

Stabilisatoren: Metallsalze, insbesondere Kupfersalze und Molybdänsalze sowie Kupferkomplexe, Phosphite, sterisch gehinderte Phenole, sekundäre Amine, UV-Absorber und HALS-Stabilisatoren.

Füllstoffe: Glasfasern, Glaskugeln, Mahlglasfaser, Kieselgur, Talkum, Kaolin, Tone, CaF₂, Aluminiumoxide sowie Kohlefasern.

Gleitfähigkeitsverbesserer und Schmiermittel: MoS₂, Paraffine, Fettalkohole sowie Fettsäureamide.

Formentrennmittel und Verarbeitungshilfsstoffe: Wachse (Montanate), Montansäurewachse, Montanesteiwachse, Ester von Fettsäuren und Fettalkoholen, Polysiloxane, Polyvinylalkohol, SiO₂, Calciumsilikate sowie Perfluorpolyether.

Schlagzähmodifikatoren: Polybutadien, EPM, EPDM, HDPE, Acrylatkautschuk, NBR, H-NBR.

Antistatika: Ruß, Carbonfasern, Graphitfibrillen, Stahlfasern, mehrwertige Alkohole, Fettsäureester, Amine, Säureamide, quarternäre Ammoniumsalze.

Weitere Polymere: ABS, Polypropylen.

Diese Zuschlagstoffe können in den üblichen, dem Fachmann bekannten Mengen verwendet werden.

Die Formmasse enthält vorzugsweise mindestens 50 Gew.-%, bevorzugt mindestens 60 Gew.-%, besonders bevorzugt mindestens 70 Gew.-%, insbesondere bevorzugt mindestens 80 Gew.-% und ganz besonders bevorzugt mindestens 90 Gew.-% der Mischung aus Polyamid und Polyetheramid.

Polyetheramide sind beispielsweise aus der DE-A- 30 06 961 bekannt; sie enthalten als Comonomer ein Polyetherdiamin.

Beim Polyetherdiamin kann die Polyethereinheit beispielsweise auf 1.2-Ethandiol, 1.2-Propandiol, 1.3-Propandiol, 1.4-Butandiol oder 1.3-Butandiol basieren. Die Polyethereinheit kann auch gemischt aufgebaut sein, etwa mit statistischer oder blockweiser Verteilung der von den Diolen herrührenden Einheiten. Das Gewichtsmittel der Molmasse der Polyetherdiamine liegt bei 200 bis 5000 g/mol und vorzugsweise bei 400 bis 3000 g/mol; ihr Anteil am Polyetheramid beträgt bevorzugt 4 bis 60 Gew.-% und besonders bevorzugt 10 bis 50 Gew.-%. Geeignete Polyetherdiamine sind durch Konversion der entsprechenden Polyetherdiole durch reduktive Aminierung oder Kupplung an Acrylnitril mit nachfolgender Hydrierung zugänglich; sie sind z. B. in Form der JEFFAMIN^{®} D- oder ED-Typen oder der ELASTAMINE^{®}-Typen bei der Huntsman Corp. oder in Form der Polyetheramin D-Reihe bei der BASF SE kommerziell erhältlich. In geringen Mengen kann auch ein Polyethertriamin mitverwendet werden, z. B. ein JEFFAMIN^{®}T-Typ, falls ein verzweigtes Polyetheramid eingesetzt werden soll. Vorzugsweise setzt man Polyetherdiamine ein, die pro Ethersauerstoff im Mittel mindestens 2,3 Kohlenstoffatome in der Kette enthalten.

Überraschenderweise hat es sich gezeigt, dass ein aminoendgruppenreiches Polyetheramid in der Schmelze, also bei der Herstellung des Masterbatches sowie bei den Verarbeitungsschritten gemäß d) und e) nicht oder nur in geringem Umfang mit der Verbindung mit mindestens zwei Carbonateinheiten reagiert. Der Grund für die geringe Reaktivität der Aminoendgruppen des Polyetheramids ist unbekannt; möglicherweise ist sterische Hinderung die Ursache.

Im erfindungsgemäßen Verfahren wird mindestens eine Verbindung mit mindestens zwei Carbonateinheiten in einem Mengenverhältnis von 0,005 bis 10 Gew.-% eingesetzt, berechnet im Verhältnis zum eingesetzten Polyamid. Vorzugsweise liegt dieses Verhältnis im Bereich von 0,01 bis 5,0 Gew.-%, besonders bevorzugt im Bereich von 0,05 bis 3 Gew.-%. Der Begriff "Carbonat" bedeutet hier Ester der Kohlensäure insbesondere mit Phenolen oder Alkoholen.

Die Verbindung mit mindestens zwei Carbonateinheiten kann niedermolekular, oligomer oder polymer sein. Sie kann vollständig aus Carbonateinheiten bestehen oder sie kann noch weitere Einheiten aufweisen. Diese sind vorzugsweise Oligo- oder Polyamid-, -ester-, -ether-, -etheresteramid- oder -etheramideinheiten. Solche Verbindungen können durch bekannte Oligo- oder Polymerisationsverfahren bzw. durch polymeranaloge Umsetzungen hergestellt werden.

In einer bevorzugten Ausführungsform handelt es sich bei der Verbindung mit mindestens zwei Carbonateinheiten um ein Polycarbonat, beispielsweise auf Basis von Bisphenol A, bzw. um ein Blockcopolymeres, das einen derartigen Polycarbonatblock enthält.

Geeignete Verbindungen mit mindestens zwei Carbonateinheiten sind in der WO 00/66650, auf die hier ausdrücklich Bezug genommen wird, ausführlich beschrieben.

Die Konzentration der Verbindung mit mindestens zwei Carbonateinheiten im Masterbatch beträgt vorzugsweise 0,15 bis 50 Gew.-%, besonders bevorzugt 0,2 bis 25 Gew.-% und insbesondere bevorzugt 0,3 bis 15 Gew.-%. Die Herstellung eines solchen Masterbatches erfolgt in der üblichen, dem Fachmann bekannten Weise, insbesondere durch Mischen in der Schmelze. Bevorzugt mischt man bei der Verarbeitung die aufzukondensierende Polyamidformmasse als Granulat mit dem Granulat des Masterbatches. Es kann aber auch eine Granulatmischung der fertig compoundierten Polyamidformmasse mit dem Masterbatch hergestellt, anschließend transportiert oder gelagert und danach verarbeitet werden. Entsprechend kann natürlich auch mit Pulvermischungen verfahren werden. Entscheidend ist, dass die Mischung erst bei der Verarbeitung aufgeschmolzen wird. Eine gründliche Vermischung der Schmelze bei der Verarbeitung ist empfehlenswert. Das Masterbatch kann genauso gut jedoch auch als Schmelzestrom mit Hilfe eines beigestellten Extruders in die Schmelze der zu verarbeitenden Polyamidformmasse zudosiert und dann gründlich eingemischt werden.

Die Erfindung ist anwendbar bei Polyamiden, die herstellungsbedingt mindestens 5 ppm Phosphor in Form einer sauren Verbindung enthalten. In diesem Fall wird der Polyamidformmasse vor der Compoundierung oder bei der Compoundierung 0,001 bis 10 Gew.-%, bezogen auf das Polyamid, eines Salzes einer schwachen Säure zugegeben. Geeignete Salze sind in der DE-A-103 37 707 offenbart, auf die hiermit ausdrücklich Bezug genommen wird.

Die Erfindung ist jedoch genauso gut anwendbar bei Polyamiden, die herstellungsbedingt weniger als 5 ppm Phosphor oder gar keinen Phosphor in Form einer sauren Verbindung enthalten. In diesem Fall kann zwar, muss aber nicht ein entsprechendes Salz einer schwachen Säure zugegeben werden.

Die durch Umsetzung der Polyamidformmasse mit dem Masterbatch erhaltene Schmelzemischung wird ausgetragen und verfestigt. Dies kann beispielsweise auf folgende Weisen geschehen:
- Die Schmelze wird als Strang ausgetragen, beispielsweise durch ein Wasserbad abgekühlt und der Strang anschließend granuliert. Die erhaltene Formmasse kann anschließend zu Formteilen weiterverarbeitet werden.
- Die Schmelze wird als Profil extrudiert, beispielsweise als Rohr.
- Die Schmelze wird zu einem Schlauch ausgeformt, welcher zur Beschichtung auf ein Rohr aufgebracht wird.
- Die Schmelze wird als Folie oder Platte extrudiert; diese können anschließend gegebenenfalls monoaxial oder biaxial gestreckt und/oder um ein Formstück gewickelt werden. Die Folie oder Platte kann auch vor der Weiterverarbeitung tiefgezogen werden.
- Die Schmelze wird zu Vorformlingen extrudiert, die anschließend in einem Blasformverfahren verformt werden.
- Die Schmelze wird in einem Spritzgießprozess zu einem Formteil verarbeitet.

Die erfingdungsgemäß hergestellten Formteile sind in einer Ausführungsform Hohlkörper oder Hohlprofile, insbesondere mit großen Durchmessern, beispielsweise Liner, Gasleitungsrohre, Schichten von Offshore-Leitungen, Subsea-Leitungen oder Versorgungsleitungen, Raffinerieleitungen, Hydraulikleitungen, Chemikalienleitungen, Kabelkanäle, Tankstellenversorgungsleitungen, Belüftungsleitungen, Luftansaugrohre, Tankeinfüllstutzen, Vorratsbehälter und Kraftstofftanks. Derartige Formteile sind herstellbar beispielsweise durch Extrusion, Coextrusion oder Blasformen einschließlich Saugblasformen, 3-D-Blasformen, Schlaucheinlege- und Schlauchmanipulationsverfahren. Diese Verfahren sind Stand der Technik.

Die Wandung dieser Hohlkörper oder Hohlprofile kann hierbei entweder einschichtig sein und in diesem Fall vollständig aus der anspruchsgemäß verwendeten Formmasse bestehen, sie kann aber auch mehrschichtig sein, wobei die erfindungsgemäß verwendete Formmasse die Außenschicht, die Innenschicht und/oder die Mittelschicht bilden kann. Die Wandung kann aus einer Vielzahl von Schichten bestehen; die Anzahl der Schichten richtet sich nach dem Anwendungszweck. Die andere Schicht bzw. die anderen Schichten bestehen aus Formmassen auf Basis anderer Polymerer, beispielsweise von Polyethylen, Polypropylen, Fluorpolymeren, oder aus Metall, beispielsweise Stahl. Beispielsweise sind die für Offshore-Leitungen verwendeten flexiblen Leitungen mehrschichtig aufgebaut; sie bestehen in der Regel aus einer Stahlstruktur, die mindestens eine Polymerschicht und in der Regel mindestens zwei Polymerschichten enthält. Der innere Aufbau solcher Schläuche ist beispielsweise in der WO2006/097678 beschrieben. Die Polymerschichten übernehmen dabei zum einen die Funktion des Abdichtens des Rohres, so dass das transportierte Fluid nicht austreten kann, zum anderen, wenn die Schicht außen liegt, die Funktion des Schutzes der Stahlschichten gegen das umliegende Meerwasser. Die gegen das transportierte Fluid abdichtende Polymerschicht ist in einer Ausführungsform auf einer innen liegenden Karkasse extrudiert. Diese Polymerschicht, häufig auch Barriereschicht genannt, kann, wie oben beschrieben, wiederum aus mehreren Polymerschichten bestehen.

Durch den Einsatz von Polyetheramid im Masterbatch kann vorteilhafterweise die Flexibilität der Formmasse so erhöht werden, dass gegebenenfalls eine weitere Weichmachung durch externe Weichmacher entfallen kann. Dies hat den Vorteil, dass auch bei Kontakt mit stark extrahierenden Medien, wie z. B. überkritischem Kohlendioxid, die Materialeigenschaften konstant bleiben.

Im Folgenden soll die Erfindung beispielhaft erläutert werden. Im Beispiel werden folgende Materialien eingesetzt:
- PA12:: 56 mäq/kg NH₂-Gruppen und 16 mäq/kg COOH-Gruppen; Viskositätszahl gemäß EN ISO 307, gemessen als 0,5-gewichtsprozentige Lösung in m-Kresol bei 25 °C : 220 ml/g. Das Granulat enthält 0,1 Gew.-% Ceasit^{®}PC, bezogen auf die Gesamtmenge.
- PEA:: Polyetheramid, hergestellt aus folgenden Komponenten: 47,452 kg Laurinlactam
4,781 kg Dodecandisäure
42,767 kg Elastamine^{®} RP-2005
0,095 kg Hypophosphorige Säure (als 50%ige wässrige Lösung)

Das Produkt wies folgende Parameter auf:
26 mäq/kg NH₂-Gruppen
11 mäq/kg COOH-Gruppen
Viskositätszahl gemäß EN ISO 307 : 200 ml/g.

- Brüggolen^{®} M1251:: Mischung aus einem niederviskosen Polycarbonat und einem säureterminierten PA6.
- Ceasit^{®}PC:: Calciumstearat.

### Herstellung des Masterbatches:

Auf einem Zweischneckenextruder vom Typ Werner & Pfleiderer ZSK 30 wurden bei 240 °C folgende Materialien in der Schmelze gemischt, extrudiert und granuliert:
96,9 Gew.-Teile PEA,
3,0 Gew.-Teile Brüggolen^{®} M1251 und
0,1 Gew.-Teile Ceasit^{®} PC.

Das Produkt wies eine Viskositätszahl gemäß EN ISO 307 von 223 ml/g auf. Es fand also kein nennenswerter Aufbau des Molekulargewichts statt.

### Herstellung eines Rohres:

Auf einem 50er Reifenhäuser Einschneckenextruder mit Dreizonenschnecke und L = 25D wurde eine Granulatmischung von 75 Gew.-Teilen PA12 und 25 Gew.-Teilen des Masterbatches bei 250 °C verarbeitet und als Rohr mit einer Wandstärke von 2,9 mm und einem Außendurchmesser von 32 mm extrudiert.

Das Material des Rohres wies eine Viskositätszahl gemäß EN ISO 307 von 275 ml/g auf.

## Patentansprüche

1. Verfahren zur Herstellung einer Formmasse oder eines Formteils unter Aufkondensierung einer Polyamidformmasse mit 0.005 bis 10 Gew.-%, bezogen auf das Polyamid, einer Verbindung mit mindestens zwei Estereinheiten der Kohlensäure, insbesondere mit Phenolen oder Alkoholen, das folgende Schritte enthält:
a) Eine Formmasse auf Basis eines Polyamids wird bereitgestellt, wobei die Endgruppen des Polyamids zu mindestens 50 % als Aminoendgruppen vorliegen und der Anteil an Polyamid 10 bis 99 Gew.-Teile beträgt.
b) eine Mischung der Polyamidformmasse und eines Masterbatches, das die Verbindung mit mindestens zwei Estereinheiten der Kohlensäure enthält sowie ein Polyetheramid, wird hergestellt, wobei der Anteil an Polyetheramid im Masterbatch 1 bis 90 Gew.-Teile beträgt,
wobei die Summe der Gew.-Teile des Polyamids und des Polyetheramids 100 beträgt und die Endgruppen des Polyetheramids zu mindestens 50 % als Aminoendgruppen vorliegen,
c) die Mischung wird gegebenenfalls gelagert und/oder transportiert,
d) die Mischung wird unter Scherung in der Schmelze gemischt und
e) die Schmelzemischung wird ausgetragen und verfestigt.

2. Verfahren gemäß Anspruch 1,
**dadurch gekennzeichnet,**
**dass** die Formmasse auf Basis eines Polyamids zusätzlich 0,1 bis 90 Gew.-Teile Polyetheramid enthält, wobei die Summe der Gew.-Teile des Polyamids von a), des Polyetheramids von a) und des Polyetheramids von b) 100 beträgt und die Endgruppen des Polyetheramids zu mindestens 50 % als Aminoendgruppen vorliegen.

3. Verfahren gemäß einem der vorhergehenden Ansprüche,
**dadurch gekennzeichnet,**
**dass** die resultierende Formmasse bzw. das resultierende Formteil 10 bis 99 Gew.-Teile Polyamid und 1 bis 90 Gew.-Teile Polyetheramid enthält, wobei die Summe der Gewichtsteile von Polyamid und Polyetheramid 100 beträgt.

4. Verfahren gemäß einem der Ansprüche 1 und 2.
**dadurch gekennzeichnet,**
**dass** bei mehrkomponentigen Formteilen die Komponente, die aus der gemäß einem der Ansprüche 1 und 2 hergestellten Formmasse besteht, 10 bis 99 Gew.-Teile Polyamid und 1 bis 90 Gew.-Teile Polyetheramid enthält, wobei die Summe der Gewichtsteile von Polyamid und Polyetheramid 100 beträgt.

5. Verfahren gemäß einem der vorhergehenden Ansprüche.
**dadurch gekennzeichnet,**
**dass** die resultierende Formmasse bzw. das resultierende Formteil mindestens 50 Gew.-% der Mischung aus Polyamid und Polyetheramid enthält.

6. Verfahren gemäß einem der vorhergehenden Ansprüche,
**dadurch gekennzeichnet,**
**dass** das im Polyetheramid als Comonomer enthaltene Polyetherdiamin ein Gewichtsmittel der Molmasse von 200 bis 5000 g/mol besitzt und sein Anteil am Polyetheramid 4 bis 60 Gew.-% beträgt.

7. Verfahren gemäß einem der vorhergehenden Ansprüche,
**dadurch gekennzeichnet,**
**dass** die Konzentration der Verbindung mit mindestens zwei Estereinheiten der Kohlensäure im Masterbatch 0,15 bis 50 Gew.-% beträgt.

8. Formmasse, hergestellt gemäß einem der Ansprüche 1 bis 7.

9. Formteil, hergestellt gemäß einem der Ansprüche 1 bis 7.

10. Formteil gemäß Anspruch 9,
**dadurch gekennzeichnet,**
**dass** es ein Profil, eine Platte oder eine Folie ist.

11. Formteil gemäß einem der Ansprüche 9 und 10,
**dadurch gekennzeichnet,**
**dass** es ein Liner, ein Gasleitungsrohr, eine Schicht einer Offshore-Leitung, einer Subsea-Leitung oder einer Versorgungsleitung, eine Raffinerieleitung, eine Hydraulikleitung, eine Chemikalienleitung, ein Kabelkanal, eine Tankstellenversorgungsleitung, eine Belüftungsleitung, ein Luftansaugrohr, ein Tankeinfüllstutzen, ein Vorratsbehälter oder ein Kraftstofftank ist.

## Claims

1. Process for producing a moulding composition or a moulding with condensing up of a polyamide moulding composition by means of 0.005 to 10% by weight, based on the polyamide, of a compound having at least two ester units of carbonic acid, in particular having phenols or alcohols, which comprises the following steps:
a) a moulding composition based on a polyamide is provided, with at least 50% of the end groups of the polyamide being present as amino end groups and the proportion of polyamide being from 10 to 99 parts by weight,
b) a mixture of the polyamide moulding composition and a masterbatch containing the compound having at least two ester units of carbonic acid and also a polyetheramide is produced, with the proportion of polyetheramide in the masterbatch being from 1 to 90 parts by weight, where the sum of the parts by weight of the polyamide and the polyetheramide is 100 and at least 50% of the end groups of the polyetheramide are present as amino end groups,
c) the mixture is, if desired, stored and/or transported,
d) the mixture is mixed as a melt with the introduction of shear and
e) the melt mixture is discharged and solidified.

2. Process according to Claim 1,
**characterized in that**
the moulding composition based on a polyamide additionally contains from 0.1 to 90 parts by weight of polyetheramide, where the sum of the parts by weight of the polyamide of a), the polyetheramide of a) and the polyetheramide of b) is 100 and at least 50% of the end groups of the polyetheramide are present as amino end groups.

3. Process according to either of the preceding claims,
**characterized in that**
the resulting moulding composition or the resulting moulding contains from 10 to 99 parts by weight of polyamide and from 1 to 90 parts by weight of polyetheramide, where the sum of the parts by weight of polyamide and polyetheramide is 100.

4. Process according to either Claim 1 or 2,
**characterized in that**
in the case of multicomponent mouldings the component comprising the moulding composition produced according to either Claim 1 or 2 contains from 10 to 99 parts by weight of polyamide and from 1 to 90 parts by weight of polyetheramide, where the sum of the parts by weight of polyamide and polyetheramide is 100.

5. Process according to any of the preceding claims,
**characterized in that**
the resulting moulding composition or the resulting moulding contains at least 50% by weight of the mixture of polyamide and polyetheramide.

6. Process according to any of the preceding claims,
**characterized in that**
the polyetherdiamine present as comonomer in the polyetheramide has a weight average molar mass of from 200 to 5000 g/mol and its proportion in the polyetheramide is from 4 to 60% by weight.

7. Process according to any of the preceding claims,
**characterized in that**
the concentration of the compound having at least two ester units of carbonic acid in the masterbatch is from 0.15 to 50% by weight.

8. Moulding composition produced according to any of Claims 1 to 7.

9. Moulding produced according to any of Claims 1 to 7.

10. Moulding according to Claim 9,
**characterized in that**
it is a profile, a plate or a film.

11. Moulding according to either Claim 9 or 10,
**characterized in that**
it is a liner, a gas pipe, a layer of an offshore pipeline, a subsea pipeline or a supply line, a refinery line, a hydraulic line, a line for chemicals, a cable conduit, a filling station supply line, a ventilation line, an air intake pipe, a tank filling port, a storage container or a fuel tank.

## Revendications

1. Procédé pour la production d'une matière à mouler ou d'une pièce moulée avec application par condensation sur une matière à mouler polyamide de 0,005 à 10 % en poids, par rapport au polyamide, d'un composé comportant au moins deux unités ester de l'acide carbonique, en particulier avec des phénols ou des alcools, qui comporte les étapes suivantes :
a) on prépare une matière à mouler à base d'un polyamide, les groupes terminaux du polyamide étant à raison d'au moins 50 % présents sous forme de groupes terminaux amino et la teneur en polyamide valant de 10 à 99 parties en poids ;
b) on prépare un mélange de la matière à mouler polyamide et d'un mélange-maître qui contient le composé comportant au moins deux unités ester de l'acide carbonique ainsi qu'un polyétheramide, la concentration du polyétheramide dans le mélange-maître valant de 1 à 90 parties en poids,
la somme des parties en poids du polyamide et du polyétheramide étant égale à 100 et les groupes terminaux du polyétheramide étant à raison d'au moins 50 % présents sous forme de groupes terminaux amino,
c) éventuellement on stocke et/ou transporte le mélange,
d) on homogénéise le mélange avec cisaillement dans la masse fondue et
e) le mélange est appliqué et solidifié.

2. Procédé selon la revendication 1,
**caractérisé en ce que**
la matière à mouler à base d'un polyamide contient en outre 0,1 à 90 parties en poids de polyétheramide, la somme des parties en poids du polyamide de a), du polyétheramide de a) et du polyétheramide de b) étant égale à 100 et les groupes terminaux du polyétheramide étant à raison d'au moins 50 % présents sous forme de groupes terminaux amino.

3. Procédé selon l'une quelconque des revendications précédentes,
**caractérisé en ce que**
la matière à mouler résultante ou la pièce moulée résultante contient 10 à 99 parties en poids de polyamide et 1 à 90 parties en poids de polyétheramide, la somme des parties en poids du polyamide et du polyétheramide étant égale à 100.

4. Procédé selon l'une quelconque des revendications 1 et 2,
**caractérisé en ce que**
dans des pièces moulées multicomposant le composant qui consiste en la matière à mouler produite selon l'une quelconque des revendications 1 et 2 contient 10 à 99 parties en poids de polyamide et 1 à 90 parties en poids de polyétheramide, la somme des parties en poids du polyamide et du polyétheramide étant égale à 100.

5. Procédé selon l'une quelconque des revendications précédentes,
**caractérisé en ce que**
la matière à mouler résultante ou la pièce moulée résultante contient au moins 50 % en poids du mélange de polyamide et polyétheramide.

6. Procédé selon l'une quelconque des revendications précédentes,
**caractérisé en ce que**
la polyétherdiamine contenue en tant que comonomère dans le polyétheramide présente une moyenne en poids de la masse moléculaire de 200 à 5 000 g/mole et sa proportion dans le polyétheramide vaut de 4 à 60 % en poids.

7. Procédé selon l'une quelconque des revendications précédentes,
**caractérisé en ce que**
la concentration du composé comportant au moins deux unités ester de l'acide carbonique dans le mélange-maître vaut de 0,15 à 50 % en poids.

8. Matière à mouler, produite selon l'une quelconque des revendications 1 à 7.

9. Pièce moulée, fabriquée selon l'une quelconque des revendications 1 à 7.

10. Pièce moulée selon la revendication 9,
**caractérisée en ce**
**qu'**elle est un profilé, une plaque ou une feuille.

11. Pièce moulée selon l'une quelconque des revendications 9 et 10,
**caractérisée en ce**
**qu'**elle est une colonne perdue, un tube de canalisation de gaz, une couche d'une conduite en mer, une conduite sous-marine ou une conduite de distribution, une conduite de raffinerie, une conduite hydraulique, une conduite de produits chimiques, une conduite de câbles, une conduite de ravitaillement de station d'essence, un conduit d'aération, un tube d'aspiration d'air, une tubulure de remplissage de réservoir, un réservoir de stockage ou un réservoir de carburant.
